**Europäisches Patentamt**

**European Patent Office**

**Office européen des brevets**

(19)

(11) Veröffentlichungsnummer: **0 163 256**
**B1**

(12)

# EUROPÄISCHE PATENTSCHRIFT

(45) Veröffentlichungstag der Patentschrift:
24.02.88

(21) Anmeldenummer: 85106324.8

(22) Anmeldetag: 23.05.85

(51) Int. Cl.⁴: **B 65 G 47/24**

(54) Ausrichtvorrichtung für Platten.

(30) Priorität: 01.06.84 DE 3420431

(43) Veröffentlichungstag der Anmeldung:
04.12.85 Patentblatt 85/49

(45) Bekanntmachung des Hinweises auf die Patenterteilung:
24.02.88 Patentblatt 88/8

(84) Benannte Vertragsstaaten:
AT BE CH DE FR GB IT LI NL SE

(56) Entgegenhaltungen:
DE-B-1 150 354
DE-B-1 275 462
DE-U-1 954 864
FR-A-1 363 173
US-A-3 791 564
US-A-3 952 866
US-A-4 214 936

(73) Patentinhaber: HOECHST AKTIENGESELLSCHAFT,
Postfach 80 03 20, D-6230 Frankfurt am Main 80
(DE)

(72) Erfinder: Kühnert, Hans- Günter Egbert,
Lerchenweg 8, D-6106 Erzhausen (DE)

## Beschreibung

Die Erfindung betrifft eine Ausrichtvorrichtung zum mittigen Ausrichten von auf einer Abstützung aufliegenden Gegenständen mittels an den Seiten der Gegenstände angreifender Anschläge, die an Führungen befestigt sind, die über der Abstützung mittels einer motorisch angetriebenen, um je ein Kettenrad an den Enden endlos umlaufenden Kette entlang einer in Richtung der Ausrichtbewegung verlaufenden Führungseinrichtung verschiebbar sind, welche an je einer zu beiden Seiten der Abstützung unverrückbaren Befestigung, die zugleich je eines der Kettenräder trägt, gelagert ist, wobei die eine Führung mit dem Obertrum und die andere Führung mit dem Untertrum der Kette verbunden sind.

Aus der DE-U-1 954 874 ist eine derartige Ausrichtvorrichtung für Stäbe, Stangen, Rohre oder dergleichen langgestreckte Werkstücke in einer Transporteinrichtung und/oder einer Einrichtung für das Widerstandserwärmen von solchen langgestreckten Werkstücken bekannt. Auf Ständern dieser Vorrichtung sind Wellen gelagert, die Räder tragen, über welche ein Seil oder eine Kette endlos herumgeführt ist. Eine der Wellen wird von einem Motor aus angetrieben, so daß die Kette bzw. das Seil hin- und herbewegt werden kann.

Ein Richtwagen ist am Obertrum der Kette und ein weiterer Richtwagen am Untertrum der Kette befestigt. Die Richtwagen laufen mittels Rollen auf einer Schiene. Zum Ausrichten eines Werkstücks, das auf eine Rollenbahn abgelegt wird, werden die beiden Richtwagen aufeinander zu bewegt, von denen jeder an seiner Unterseite einen Tastkopf trägt. Der Motor treibt die beiden Richtwagen so Lange an, bis der eine Tastkopf die Stirnseite des Werkstücks berührt hat und dieses bis zur Berührung der anderen Stirnseite des Werkstücks mit dem zweiten Tastkopf vor sich herschiebt. In diesem Augenblick wird der Motor abgeschaltet, da das Werkstück mittig ausgerichtet ist, und anschließend läuft der Motor in die umgekehrte Richtung, so daß die beiden Richtwagen in ihre Ausgangsstellungen auseinanderfahren. Das ausgerichtete Werkstück kann dann auf der Rollenbahn weitertransportiert werden. Sobald der Ausrichtvorgang beendet ist, erfolgt während des weiteren Transports weder ein Ausrichten noch eine Führung des Werkstücks.

Aus der Druckschrift US-A-4 214 936 ist eine Ausrichtvorrichtung bekannt, die Anschläge aufweist, die gegen sich gegenüberliegende Längskanten einer beispielsweise schräg auf der Rollenbahn aufliegenden Platte und in Transportrichtung der Platte geführt werden. Die Anschläge bewegen sich mit größerer Geschwindigkeit als die Platte auf der Rollenbahn, so daß es beim Ausrichten der Platte nicht zu einem Verkeilen der verkanteten Platte zwischen den Anschlägen kommen kann.

Vor dem Laminieren von Schichtträgern, wie z. B. Leiterplatten, Multilayerschichten, Metallplatten oder Substraten mit beidseitig aufgedampften und/oder aufgeklebten Metallschichten, mit einem Fotoresistfilm ist ein kantenparalleles Ausrichten des Schichtträgers, der auf einer Führungsbahn transportiert wird, erforderlich, um den Fotoresistfilm, der von Vorratsrollen abgezogen wird, deckungsgleich mit dem Schichtträger auflaminieren zu können.

Aus den offengelegten europäischen Patentanmeldungen 0 040 842, 0 040 843 und 0 041 642 sind Laminiervorrichtungen bekannt, bei denen ein Substrat bzw. ein Schichtträger beidseitig unter Druckanwendung mit einem Trockenresist laminiert wird. Der Trockenresist wird für die jeweilig zu laminierende Seite des Schichtträgers, beispielsweise eine Leiterplatte, von einer Vorratsrolle abgezogen und einem Paar von Laminierwalzen zugeführt, durch deren Spalt die beiden Trockenresistfilme und der dazwischen befindliche Schichtträger hindurchlaufen.

Die US-PS-4 214 936 betrifft eine Laminiervorrichtung, bei der horizontal transportierte Platten, die kontinuierlich vorwärtsbewegt und kontaktbeheizt sind, beidseitig laminiert werden, wobei die Umfangsgeschwindigkeit der Laminierwalzen größer als die Vorschubgeschwindigkeit der Platten ist. Sobald ein Sensor die Hinterkante der vorgeheizten Platte kurz vor ihrem Eintritt in den Spalt zwischen den Laminierwalzen feststellt, werden diese erst nach einer gewissen Verzögerungszeit gestoppt, die es ermöglicht, daß die Hinterkante der Platte den Laminierspalt passiert. Wird die Vorderkante der nachfolgenden Platte festgestellt, beginnen die Laminierwalzen von neuem zu rotieren und die in den Spalt eintretende Platte wird laminiert. Dieser Vorgang wird für jede neue Platte wiederholt, und es wird ein gleichbleibender Abstand zwischen den einzelnen laminierten Platten nach dem Spalt erhalten, wenn die der Laminiervorrichtung zugeführten Platten von Anfang an gleichbleibenden Abstand besitzen bzw. die Platten in gleichbleibenden Zeitabständen durch die Laminiervorrichtung hindurchlaufen. Es entsteht dann ein zusammenhängendes Band aus zwei Trockenresistschichten, zwischen denen jeweils im gleichen Abstand die Platten eingeschlossen sind.

Bei den bekannten Laminiervorrichtungen werden die Platten nach dem Durchlauf durch eine Reinigungsvorrichtung mit Hilfe von einem Paar von Ausrichtrollen, von denen je eine Rolle an der einen Seitenkante der Platte anliegt, in Transportrichtung ausgerichtet. Diese Ausrichtrollen sind auf eine bestimmte Breite der Platte eingestellt, so daß bei einer Formatänderung der Platten der Abstand der Ausrichtrollen für die veränderte Plattenbreite zeitaufwendig neu eingestellt werden muß. Das Ausrichten der Platten durch Ausrichtrollen kann bei einem Vertikaltransport der Platte ausreichend sein, da das Eigengewicht der Platte das Vertikalausrichten zusätzlich unterstützt, genügt jedoch im allgemeinen nicht bei einem Horizontaltransport der Platte, da die punktförmige Berührung der Platte durch die Ausrichtrollen für ein Fluchten der Platte in ihre Transportrichtung nicht ausreicht.

Aufgabe der Erfindung ist es, eine Ausrichtvorrichtung für Platten zu schaffen, die kompakt und einfach aufgebaut ist und mit der das Ausrichten der Platten während der Plattenbewegung in Transportrichtung mit großer Genauigkeit ohne seitliche Absetzbewegung der Platten über eine längere Wegstrecke erfolgt.

Diese Aufgabe wird erfindungsgemäß durch eine Ausrichtvorrichtung nach den Merkmalen des Anspruchs 1 gelöst.

In Ausgestaltung der Erfindung durchsetzt die Führungsstange die beiden Führungen, sind an der Oberseite der einen Führung eine obere Kettenklemme und an der Oberseite der anderen Führung eine untere Kettenklemme befestigt und ist die obere Kettenklemme winkelförmig und sowohl mit dem Obertrum der Kette als auch mit dem Motor für die Kettenbewegung und die untere Kettenklemme nur mit dem Untertrum der Kette fest verbunden.

In Weiterbildung der Erfindung ist die obere, winkelförmige Kettenklemme mit der Kolbenstange eines parallel zur Führungsstange ausgerichteten Linearmotors verbunden, der auf der Oberseite der einen Befestigung angebracht ist und der zwei extreme Kolbenpositionen einnimmt, in denen die Kolbenstange am weitesten aus- bzw. eingefahren ist. Zur Einstellung auf unterschiedliche Plattenbreiten ist in der zur Rollenbahn senkrecht verlaufenden Ebene der Kette der Minimalabstand der beiden Anschläge voneinander eine vorgegebene Größe $L_0$ und ist ferner der Maximalabstand der beiden Anschläge gleich dem Betrag aus der vorgegebenen Größe $L_0$ und dem doppelten Abstand zwischen den beiden extremen Kolbenpositionen der Kolbenstange des Motors.

Im folgenden wird die Erfindung anhand eines zeichnerisch dargestellten Ausführungsbeispiels näher erläutert.

Es zeigen:
Fig. 1 eine perspektivische Ansicht einer Ausrichtvorrichtung nach der Erfindung, und
Fig. 2 eine schematische Darstellung der Ausrichtvorrichtung nach Fig. 1.

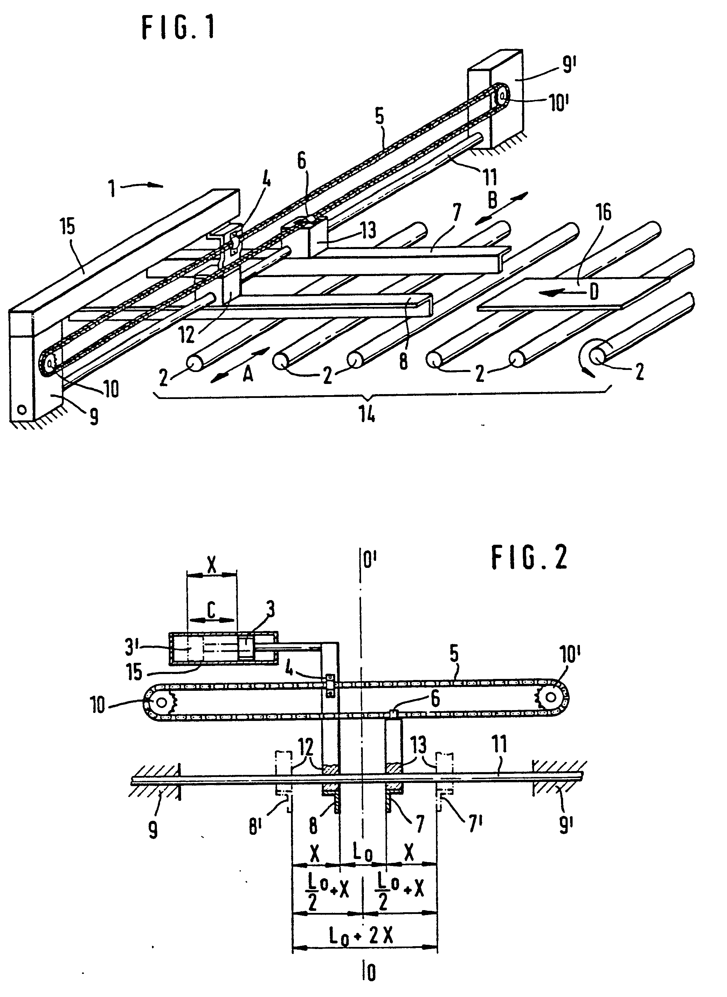

Die in Fig. 1 gezeigte Ausrichtvorrichtung 1 für einen Schichtträger, wie beispielsweise eine Multilayerschicht oder eine Platte 16, die eine Leiterplatte oder sonstige zweiseitig metallisierte Platte sein kann, ist Bestandteil einer nichtdargestellten Laminiervorrichtung, in der auf den Schichtträger beidseitig ein Fotoresistfilm auflaminiert wird. Im Falle von Multilayerschichten erfolgt die Ausrichtung z. B. mit Hilfe von Näherungsschaltern, die ein langsames Annähern der Anschläge an die Längskanten der Multilayerschichten für den Ausrichtvorgang bewirken. Die Ausrichtvorrichtung 1 ist oberhalb einer Rollenbahn 14, entlang der die Platte 16 transportiert wird, angeordnet, wobei die horizontale Rollenbahn 14 die Platte 16 in Richtung des Pfeils D zu einer nichtdargestellten Laminierstation transportiert. Um einen exakten und geradlinigen Einzug der Platte 16 in den von zwei Laminierwalzen begrenzten Spalt der Laminierstation zu gewährleisten, ist es erforderlich, jede Platte 16 entlang ihrer Längskanten auszurichten. Hierzu umfaßt die Ausrichtvorrichtung 1 zwei zueinander parallele Anschläge 7 und 8, die sich in Richtung der Längskanten der Platte 16 erstrecken und beispielsweise winkelförmig ausgebildet sind. Die Anschläge 7 und 8 tangieren mit ihren Unterkanten die Transportrollen 2 der Rollenbahn 14 rechtwinklig und sind horizontal in Richtung der Doppelpfeile A, B verschiebbar. Des weiteren gehören zu der Ausrichtvorrichtung 1 zwei Führungen 12 und 13, die entlang einer quer zur Transportrichtung D der Platte 16 verlaufenden Führungsstange 11 verschiebbar sind. Die Anschläge 7 und 8 sind an den Führungen 12 bzw. 13 befestigt. An einer motorisch angetriebenen, endlos umlaufenden Kette 5 sind die Führungen 12 und 13 angeschlossen. Die eine Führung 12 ist mit dem Obertrum und die andere Führung 13 mit dem Untertrum der Kette 5 verbunden, wobei das Ober- und das Untertrum der Kette 5 horizontal und parallel zu der Führungsstange 11 laufen. Die Führungsstange 11 ist mit ihren Enden in quaderförmigen Befestigungen 9, 9' gelagert. An der einen Seitenfläche jeder Befestigung 9 bzw. 9', die der Platte 16 zugewandt ist, befindet sich ein Kettenrad 10 bzw. 10'.

Die Kette 5 ist um die beiden Kettenräder 10, 10' endlos herumgeführt und wird von einem Motor 15, bevorzugt handelt es sich hierbei um einen Linearmotor, angetrieben. Die Verbindung zwischen der Kette 5 und dem Motor 15 stellt einen Kettenklemme 4 her, die die Gestalt eines Winkels aufweist, von dem der eine Schenkel den Motor 15 mit dem Obertrum der Kette 5 verbindet und der andere Schenkel an der einen Führung 12 befestigt ist. Eine weitere Kettenklemme 6 schließt die andere Führung 13 an die Kette 5 an.

Der Motor 15 besitzt eine langgestreckte Gestalt und erstreckt sich parallel zu und oberhalb eines Abschnitts der Führungsstange 11. Der Motor 15 ist mit der einen quaderförmigen Befestigung 9 verbunden, mit der er einen rechten Winkel einschließt.

In Fig. 2 ist schematisch die Ausrichtvorrichtung 1 in Ansicht dargestellt. Der Linearmotor 15 bewegt einen Kolben in Richtung des Doppelpfeils C und der Kolben kann zwei extreme Kolbenpositionen 3 bzw. 3' einnehmen, wobei in der einen Kolbenposition 3 die Kolbenstange am weitesten ausgefahren und in der anderen Kolbenposition 3' die Kolbenstange am weitesten eingefahren ist. Beim Ausfahren der Kolbenstange bewegen sich die beiden Anschläge 7 und 8 aufeinander zu und haben bei Erreichen der Kolbenposition 3 einen Minimalabstand $L_0$ voneinander, der gleich der Breite der kleinsten auszurichtenden Platte ist. Die Anschläge 7 und 8 liegen dann symmetrisch zu einer Mittelebene 0-0' und besitzen von dieser Mittelebene jeweils den Abstand $L_0/2$.

Der Abstand zwischen den beiden Kolbenpositionen 3 und 3' ist gleich einer vorgegebenen Größe X. Wird die Kolbenstange aus der Kolbenposition 3 in die Kolbenposition 3' eingefahren, so bewegen sich die Anschläge 7 und 8 voneinander insgesamt um den zweifachen Betrag der Größe X weg, so daß der maximale Abstand zwischen den beiden gestrichelt dargestellten Anschlägen 7' und 8' gleich $L_0 + 2X$ ist.

Anstelle des Linearmotors 15 und des Kolbens kann auch ein kolbenloser Druckzylinder vorgesehen werden, in dem ein Mitnehmer für die Anschläge mittels Druckluft hin und her verschiebbar ist.

Die Ausrichtvorrichtung 1 arbeitet wie folgt:

Wird eine Platte 16 entlang der Rollenbahn 14 zu der Laminierstation transportiert, wie sie z. B. in der Patentanmeldung P 34 20 429.6 mit gleichem Anmeldetag wie die vorliegende Anmeldung näher beschrieben ist, so wird aufgrund des bekannten Formats der Platte 16 der Motor 15 so gesteuert, daß die Kolbenstange in eine Stellung verfahren wird, in welcher der Abstand der beiden Anschläge 7 und 8 voneinander gleich der oder geringfügig größer als die Breite der Platte 16 ist. Die Vorderkante der Platte 16 kommt an einem nichtgezeigten, in die Rollenbahn 14 geschwenkten Plattenanschlag zum Anliegen und gleichzeitig werden die Anschläge 7 und 8 bis zum Anliegen an die Längskanten der Platte 16 herangefahren und richten dabei diese, falls sie verkantet sein sollte, in Transportrichtung D so aus daß die Längskanten genau in Transportrichtung D zeigen. Danach wird der Plattenanschlag abgesenkt, die Platte beispielsweise von einem in der zuvor erwähnten Patentanmeldung P 34 20 429.6 beschriebenen Plattengreifer ergriffen und zu der Laminierstation befördert.

Werden Platten anderen Formats laminiert, so wird deren bekannte Breite zur Steuerung der Bewegung des Motors 15 verwendet, um den gegenseitigen Abstand der Anschläge 7 und 8 entsprechend der neuen Breite einzustellen. Es ist somit möglich, nur aufgrund der Steurung der Bewegung des Motors 15 den Abstand der beiden Anschläge 7 und 8 zwischen den Größen $L_0$ und $L_0 + 2X$ zu verändern.

Selbstverständlich kann die Ausrichtvorrichtung 1 ohne einen Plattenanschlag für die Vorderkante der Platte 16 und ohne Plattengreifer arbeiten, da die sich längs erstreckenden Anschläge 7 und 8, sobald sie sich auf einen Abstand gleich der Breite der Platte aufeinander zubewegt haben, die zwischen ihnen befindliche, verkantete Platte in Transportrichtung D ausrichten und diese bis zum Einzug in die Laminierstation entlang der Plattenlängskanten führen, so daß ein neuerliches Verkanten der Platte unmöglich ist.

Die Anschläge 7 und 8 in der dargestellten Ausführungsform tangieren mit ihren Unterkanten die Transportrollen 2. In einer nicht dargestellten, jedoch praktizierten Ausführungsform sind die Anschläge 7 und 8 an den Stellen der Transportrollen 2 kreisabschnittsweise ausgeschnitten und reichen mit ihren Unterkanten geringfügig unter die Plattenlaufebene.

**Patentansprüche**

1. Ausrichtvorrichtung zum mittigen Ausrichten von auf einer Abstützung aufliegenden Gegenständen mittels an den Seiten der Gegenstände angreifender Anschläge (7, 8), die an Führungen (12, 13) befestigt sind, die über der Abstützung mittels einer motorisch angetriebenen, um je ein Kettenrad (10, 10') an den Enden endlos umlaufenden Kette (5) entlang einer in Richtung der Ausrichtbewegung verlaufenden Führungseinrichtung (11) verschiebbar sind, welche an je einer zu beiden Seiten der Abstützung unverrückbaren Befestigung (9, 9'), die zugleich je eines der Kettenräder (10, 10') trägt, gelagert ist, wobei die eine Führung (12) mit dem Obertrum und die andere Führung (13) mit dem Untertrum der Kette (5) verbunden sind, dadurch gekennzeichnet, daß die Führungseinrichtung als Führungsstange (11) quer zu einer die Abstützung bildenden und die Gegenstände kontinuierlich voranfördernden Rollenbahn (14) ausgebildet ist, daß je eines der Kettenräder (10, 10') an jeweils einer der beiden, zu der Führungsstange (11) parallelen Seitenflächen jeder Befestigung (9, 9') angeordnet ist und daß jeder der beiden zueinander parallelen, in Transportrichtung (D) langgestreckten Anschläge (7, 8) winkelförmig und mit seinem Horizontalschenkel an der Unterseite der zugehörigen Führung (12, 13) befestigt ist, während sein nach unten gerichteter Vertikalschenkel mit der Unterkante an den Transportrollen (2) der Rollenbahn (14) anliegt und die Gegenstände in Gestalt von Platten (16) während des Transports ausrichtet.

2. Ausrichtvorrichtung nach Anspruch 1 dadurch gekennzeichnet daß die Führungsstange (11) die beiden Führungen (12,13) durchsetzt, daß an der Oberseite der einen Führung (12) eine obere Kettenklemme (4) und an der Oberseite der anderen Führung (13) eine untere Kettenklemme (6) befestigt sind und daß die obere Kettenklemme (4) winkelförmig ist und sowohl mit dem Obertrum der Kette (5) als auch mit dem Motor (15) für die Kettenbewegung und die untere Kettenklemme (6) nur mit dem Untertrum der Kette (5) fest verbunden sind.

3. Ausrichtvorrichtung nach Anspruch 2, dadurch gekennzeichnet, daß die obere, winkelförmige Kettenklemme (4) mit der Kolbenstange eines parallel zur Führungsstange (11) ausgerichteten Linearmotors (15) verbunden ist, der auf der Oberseite der einen Befestigung (9) angebracht ist und zwei extreme Kolbenpositionen (3, 3') einnimmt, in denen die Kolbenstange am weitesten aus- bzw. eingefahren ist.

4. Ausrichtvorrichtung nach Anspruch 3, dadurch gekennzeichnet, daß in der zur Rollenbahn (14) senkrecht verlaufenden Ebene der Kette (5) der Minimalabstand der beiden Anschläge (7, 8) voneinander eine vorgegebene Größe $L_0$ ist und daß der Maximalabstand der beiden Anschläge gleich dem Betrag aus der vorgegebenen Größe $L_0$ und dem doppelten Abstand zwischen den beiden extremen Kolbenpositionen (3, 3') der Kolbenstange des Motors (15) ist.

## Claims

1. An aligning device for centrally aligning objects resting on a support by means of stops (7, 8) which rest against the lateral edges of the objects and are fastened to guides (12, 13) which, via a motor-driven chain (5) endlessly revolving about two chain wheels (10, 10') one of which is arranged on either chain end, are displaceable above the support, in the direction of a guide device (11) which extends in the direction of alignment and is supported by two stationary fastenings (9, 9') which are provided at the two lateral ends of the support and also carry the chain wheels (10, 10'), whereby one guide (12) is connected to the upper strand of the chain (5) and the other guide (13) is connected to the lower strand of the chain (5), characterized in that said guide device is designed as a guide rod (11) which extends perpendicularly to the path of a roller conveyor (14) which constitutes the support and continously advances the objects, that each of the two chain wheels (10, 10') is fastened to one of those faces of each fastening (9, 9'), which extend parallel to the guide rod (11), and that each of the two stops (7, 8) which extend parallel in respect of one another in the direction of transport (D) is designed as an oblong angular member, the horizontal leg of which is fastened to the underside of the associated guide (12, 13) whereas the bottom edge of its downwardly directed vertical leg is in contact with the transport rollers (2) of the roller conveyor (14) and aligns the objects in the form of boards (16) during transport.

2. An aligning device as claimed in claim 1, characterized in that the guide rod (11) extends through the two guides (12, 13), that an upper chain clamp (4) is fastened to the upper surface of one of the guides (12) and a lower chain clamp (6) is fastened to the upper surface of the other guide (13), and that the upper chain clamp (4) is angular and is firmly connected to the upper strand of the chain (5) and to the motor (15) by which the chain is driven, and the lower chain claimp (6) is firmly connected to the lower strand of the chain only.

3. An aligning device as claimed in claim 2, characterized in that the upper, angular chain clamp (4) is connected to the piston rod of a linear motor (15) which extends prallel to the guide rod (11), said motor being mounted to the upper surface of one of the fastenings (9) and assuming two extreme piston positions (3, 3') where the piston is extended as far as possible or retracted as far as possible, respectively.

4. An aligning device as claimed in claim 3, characterized in that in the plane of the chain (5), which extends perpendicular to the roller conveyor (14), the minimum distance between the two stops (7, 8) is a predetermined length $L_0$ and that the maximum distance between the two stops (7, 8) is equal to the sum of the predetermined length $L_0$ plus twice the distance between the two extreme piston positions (3, 3') of the piston rod of the motor (15).

## Revendications

1. Dispositif d'orientation pour centrer des objets reposant sur un support à l'aide de butées (7, 8) prenant les côtés des objets, qui sont fixées à des guides (12, 13) mobiles au-dessus du support le long d'un dispositif de guidage (11) intervenant suivant le sens du déplacement, grâce à une chaîne sans fin (5) entraînée par un moteur et tournant à chacune de ses extrémités autour d'un pignon (10, 10') où le dispositif de guidage (11) est supporté par deux fixations (9, 9') montées immuablement sur chacun des deux côtés du support, chacun des éléments de fixation (9, 9') supportant un des pignons de chaine (10, 10') et où un (12) des guides est relié au brin supérieur et l'autre guide (13) au brin inférieur de la chaîne, caractérisé en ce que le dispositif de guidage est réalisé avec une barre de guidage (11) disposée perpendiculairement à un convoyeur à rouleaux (14) transportant en continu les objets et constituant leur support en ce que chacun des pignons (10, 10') est disposé sur une des deux faces latérales de chaque fixation (9, 9') qui sont parallèles à la tige de guidage (11) et en ce que chacune des deux butées parallèles (7, 8), s'étendant dans le sens du transport (D) et en forme d'équerre est fixée par sa branche horizontale sur la face inférieure du guide correspondant (12, 13) tandis que sa branche verticale affleure, par son bord inférieur, les rouleaux de transport (2) du convoyeur à rouleaux (14) et oriente les objets sous forme de plaques (16) pendant leur transport.

2. Dispositif d'orientation selon la revendication 1, caractérisé en ce que la tige de guidage (11) traverse les deux guides (12, 13) en ce qu'une pince de chaîne supérieure (4) est fixée sur la face supérieure d'un (12) des guides et une pince de chaîne inférieure (6) sur la face supérieure de l'autre guide (13) et en ce que la pince de chaîne supérieure (4) a une forne d'équerre et fait l'objet d'une liaison fixe aussi bien avec le brin supérieur de la chaîne (5) qu'avec le moteur (15) d'entraînement de la chaîne, alors que la pince inférieure de chaîne (6) n'est reliée qu'au brin inférieur de la chaîne (5).

3. Dispositif d'orientation selon la revendication 2, caractérisé en ce que la pince de chaîne supérieurs (4) en fome d'équerre est reliée à la tige de piston d'un moteur linéaire (15) disposé parallèlement à la tige de guidage (11), qui est monté sur la face supérieure d'une des fixations (9) et donne au piston deux positions extrêmes (3, 3') qui correspondant au déploiement maximal ou à la rentrée maximale de la tige de piston.

4. Dispositif d'orientation selon la revendication 3, caractérisé en ce que la distance minimale séparant les deux butées (7, 8) dans le plan de la chaîne (5) perpendiculaire au convoyeur à rouleaux est une grandeur prédéterminée $L_0$ et en ce que la distance maximale des deux butées est égale à la valsur de cette grandeur prédéterminée $L_0$ augmentée du double de la distance qui sépare les deux positions extrêmes (3, 3') du piston fixé à la tige de piston du moteur (15).

# FIG.1

# FIG.2